(19) **Europäisches Patentamt**

**European Patent Office**

**Office européen des brevets**

(11) **EP 1 715 572 A2**

(12) **EUROPÄISCHE PATENTANMELDUNG**

(43) Veröffentlichungstag:
25.10.2006 Patentblatt 2006/43

(51) Int Cl.:
*H02M 5/42* (2006.01)  *H02M 1/08* (2006.01)

(21) Anmeldenummer: 06112721.3

(22) Anmeldetag: **18.04.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **20.04.2005  DE 102005018340**

(71) Anmelder: **SIEMENS AKTIENGESELLSCHAFT**
**80333 München (DE)**

(72) Erfinder:
• **Vogel, Andreas**
  **91336 Heroldsbach (DE)**
• **Winzer, Gerald**
  **91056 Erlangen (DE)**

(54) **Verfahren zum Betreiben einer elektrischen Anordnung**

(57)    Die Erfindung bezieht sich auf ein Verfahren zum Betreiben einer elektrischen Anordnung mit zumindest einem Transformator (60), an den eine vorgegebene Anzahl an getakteten Umrichtern (10, 20) angeschlossen ist, wobei die Umrichter mit derselben Taktfrequenz (f) und unterschiedlichen Phasenlagen (φ) relativ zueinander betrieben werden.

Um zu erreichen, dass die u. a. durch Magnetostriktion im Transformator erzeugten Störgeräusche vom Menschen als möglichst wenig störend empfunden werden, ist erfindungsgemäß vorgesehen, dass die Phasenlagen der Umrichter derart eingestellt werden, dass die Phasendifferenz (Δφ) zwischen der Phasenlage eines jeden Umrichters relativ zur Phasenlage des phasenmäßig jeweils am nächsten liegenden Umrichters kleiner ist als eine vorgegebene Grenzphasenlage (Δφg), wobei sich die Grenzphasenlage errechnet durch Quotientenbildung aus 360 Grad und der Anzahl (Q) der an den zumindest einen Transformator (60) angeschlossenen Umrichter.

FIG 4

EP 1 715 572 A2

**Beschreibung**

Die Erfindung bezieht sich auf ein Verfahren zum Betreiben einer elektrischen Anordnung mit zumindest einem Transformator, an den eine vorgegebene Anzahl an getakteten Umrichtern angeschlossen ist, wobei die Umrichter mit derselben Taktfrequenz und unterschiedlichen Phasenlagen relativ zueinander betrieben werden. Bei den getakteten Umrichtern kann es sich beispielsweise um Stromrichter, Gleichstromsteller, Vierquadrantensteller, Schaltnetzteile oder dergleichen handeln. Die Transformatoren können beliebige Übersetzungsverhältnisse, beispielsweise auch von "1" aufweisen, und beispielsweise durch induktive Bauteile - wie z. B. Drosseln - gebildet sein.

Ein derartiges Verfahren ist beispielsweise aus der Eisenbahntechnik bekannt und wird zum Ansteuern von Antriebsmotoren von Schienenfahrzeugen eingesetzt. Als getaktete Umrichter werden üblicherweise getaktete Stromrichter eingesetzt, die mit so genannten IGBT-Transistoren (IGBT: Insulated Gate Bipolar Transistor) ausgestattet sind. Beispielsweise in dem Artikel "Moderne Drehstromantriebstechnik - Stand und Perspektiven" (Wolf-Dieter Weigel, ZEVrail Glasers Annalen Tagungsband SFT Graz 2002), insbesondere im Abschnitt 3 dieses Artikels, ist ein Verfahren zum Ansteuern von Antriebsmotoren von Schienenfahrzeugen mit getakteten Stromrichtern beschrieben.

Das Takten von Umrichtern, die aus Transformatoren gespeist werden, verursacht in den Transformatoren z. B. durch Magnetostriktion oder elektrische Felder Geräusche, deren Frequenz von der Taktfrequenz der Umrichter abhängt. Liegt die Taktfrequenz der Umrichter im kHz-Bereich, so werden die magnetostriktionsbedingten Geräusche im Allgemeinen vom Menschen als sehr unangenehm empfunden.

Um Geräuschbelästigungen durch Magnetostriktion zu vermeiden, könnte man erwägen, die Frequenz der Umrichter derart niedrig zu wählen, dass die Magnetostriktionsgeräusche frequenzmäßig unterhalb des für den Menschen hörbaren Frequenzspektrums liegen. Abgesehen von anderen technischen Problemen, die ein solcher Ansatz mit sich bringen würde, sind jedoch niedrige Taktfrequenzen im Bereich der Eisenbahntechnik unerwünscht, weil nämlich niederfrequente Rückwirkungen der Umrichter auf das Speise- bzw. Energieversorgungsnetz vermieden werden müssen. Unter "Netzrückwirkungen" ist dabei zu verstehen, dass aufgrund des Taktbetriebs der Umrichter Stromanteile im Speisenetz erzeugt werden, die der Taktfrequenz der Umrichter sowie Vielfachen davon entsprechen. Im Bereich der Eisenbahntechnik ist nämlich außerdem zu berücksichtigen, dass der Frequenzbereich bis 20 kHz auch für nachrichtentechnische Anwendungen, also für die Übertragung von Nachrichtensignalen, genutzt wird, so dass durch das Takten der Umrichter erzeugte Störfrequenzen die Signalübertragung stören könnten, wenn die Taktfrequenzen im Bereich des für die Signalübertragung genutzten Frequenzbereichs liegen würden.

Um nun zu erreichen, dass die durch das Takten der Umrichter erzeugten Störfrequenzen außerhalb des für die Signalübertragung genutzten Nutzspektrums liegen und die Netzrückwirkung minimal bleibt, werden die Umrichter mit technisch maximal möglicher Taktfrequenz betrieben. Bei der heutzutage üblichen IGBT-Technologie lassen sich Taktfrequenzen von ca. 1 kHz erreichen. Um darüber hinaus - aus Sicht des Energieversorgungsnetzes - noch höhere Frequenzen zu erreichen, ist bekannt, zwei oder mehr Umrichter gleichzeitig einzusetzen und diese zeitversetzt zu takten. Beträgt die Phasenlage zwischen zwei parallel arbeitenden Umrichtern beispielsweise 180°, so stellt sich dies dem Speisenetz gegenüber wie eine Taktfrequenz von 2 kHz dar.

Der Erfindung liegt somit die Aufgabe zugrunde, ein Verfahren zum Betreiben einer elektrischen Anordnung mit zumindest einem Transformator und daran angeschlossenen getakteten Umrichtern anzugeben, bei dem die durch Magnetostriktion im Transformator erzeugten Störgeräusche vom Menschen als möglichst wenig störend empfunden werden.

Diese Aufgabe wird ausgehend von einem Verfahren der eingangs angegebenen Art erfindungsgemäß durch die kennzeichnenden Merkmale des Anspruchs 1 gelöst. Vorteilhafte Ausgestaltungen des erfindungsgemäßen Verfahrens sind in Unteransprüchen angegeben.

Danach ist erfindungsgemäß vorgesehen, dass die Phasenlagen der an den Transformator angeschlossenen Umrichter derart eingestellt werden, dass die Phasendifferenz zwischen der Phasenlage eines jeden Umrichters relativ zur Phasenlage des phasenmäßig jeweils nächstliegenden Umrichters kleiner als eine vorgegebene Grenzphasenlage ist. Diese Grenzphasenlage wird erfindungsgemäß errechnet durch Quotientenbildung aus 360° und der Anzahl der an dem Transformator angeschlossenen Umrichter. Unter dem Begriff "phasenmäßig am nächsten liegend" wird nachfolgend jeweils derjenige Umrichter verstanden, der den geringsten Phasenabstand zum jeweils betrachteten "Referenz-Umrichter" aufweist; selbstverständlich können zu einem "Referenz-Umrichter" auch zwei Umrichter phasenmäßig benachbart sein, wenn sie jeweils den gleichen Phasenversatz zum betrachteten "Referenz-Umrichter" aufweisen.

Ein wesentlicher Vorteil des erfindungsgemäßen Verfahrens besteht darin, dass aufgrund der anspruchsgemäß definierten Phasenlage der Umrichter zueinander eine additive bzw. konstruktive Überlagerung von Störfrequenzen vermieden, zumindest weitgehend reduziert wird. Dies soll nachfolgend kurz anhand eines Beispiels erläutert werden: Sind beispielsweise an einem Transformator zwei getaktete Umrichter angeschlossen, die mit einer Phasenlage von 180° (= Grenzphasenlage gemäß Anspruch 1) betrieben werden, so löschen sich die Spektrallinien der beiden Umrichter für die Taktfrequenz im Transformator aus. Beträgt die Taktfrequenz beispielsweise 1 kHz, so würden sich die durch die beiden Umrichter im Transformator erzeugten Stromkomponenten mit der Frequenz f = 1 kHz auslöschen, so dass im Transformator kein resultierender Störstrom mit einer Taktfrequenz von 1 kHz fließen würde. Entsprechendes gilt für die dritte Harmonische der Taktfrequenz, also für die Frequenz von 3 kHz, da auch für die Frequenz von 3 kHz eine destruktive Überlagerung der Spektrallinien der beiden Umrichter auftreten würde und sich die jeweiligen Stromkomponenten bei der Frequenz von 3 kHz auslöschen würden; auch bei einer Frequenz von 3 kHz würde somit kein Primärstrom im Transformator fließen, so dass auch bei der Frequenz f = 3 kHz kaum Magnetostriktionsgeräusche auftreten würden. Problematisch ist jedoch, dass es bei der zweiten Harmonischen der Taktfrequenz, also bei der ersten Oberwelle bzw. einer Frequenz von f = 2 kHz, zu einer konstruktiven Überlagerung der Störfrequenzen kommt. Konkret wird aufgrund des Phasenversatzes von 180° zwischen den beiden Umrichtern ein relativ großer Störstrom mit einer Frequenz von 2 kHz im Transformator erzeugt, so dass bei der Frequenz von 2 kHz erhebliche, störende Magnetostriktionsgeräusche auftreten. An dieser Stelle setzt die Erfindung an, indem erfindungsgemäß vorgesehen wird, zwischen Umrichtern, die an ein und denselben Transformator angeschlossen sind, stets jeweils eine Phasenlage vorzusehen, die kleiner als eine vorgegebene Grenzphasenlage ist. Im Falle von zwei Umrichtern pro Transformator bedeutet dies beispielsweise, dass die Phasenlage zwischen den beiden Umrichtern kleiner als 180° sein muss, um eine vollständige konstruktive Überlagerung der Störströme bei der zweiten Harmonischen - also der doppelten Taktfrequenz - zu verhindern. Die Geräuschbildung im Transformator wird bei dem erfindungsgemäßen Verfahren somit deutlich reduziert.

Ein weiterer wesentlicher Vorteil des erfindungsgemäßen Verfahrens besteht darin, dass aufgrund der erfindungsgemäß erreichten Geräuschreduktion im Transformator die sonst erforderlichen Maßnahmen für eine "passive" Geräuschdämmung, wie sie in Form von Geräuschdämmmatten oder dergleichen üblich ist, reduziert werden können. Durch die Geräuschreduktion wird es also möglich, Gewicht und Material einzusparen sowie Montagekosten der Transformatoren zu reduzieren.

Falls an einen Transformator zwei getaktete Umrichter angeschlossen sind, wird es als vorteilhaft angesehen, wenn die Phasendifferenz der Phasen der beiden Umrichter zueinander zwischen 45° und 135° liegt, um die bereits erwähnten Magnetostriktionsgeräusche bei der doppelten Taktfrequenz möglichst effizient zu unterbinden. Ein vollständiges Unterdrücken der Magnetostriktionsgeräusche bei der doppelten Taktfrequenz wird gemäß einer besonders bevorzugten Ausgestaltung des Verfahrens dann erreicht, wenn die Phasendifferenz zwischen den beiden Umrichtern genau 90° beträgt. Zwar werden bei einer Phasendifferenz von ungleich 180° störende Magnetostriktionsgeräusche bei anderen Frequenzen als der doppelten Taktfrequenz erzeugt, jedoch sind die bei einer Phasenlage von 90 Grad insgesamt generierten Störgeräusche dennoch leiser und somit weniger störend als die auftretenden Störgeräusche, die bei einer Phasendifferenz von 180° bei der doppelten Taktfrequenz entstehen würden; messtechnisch wurde eine Geräuschreduktion von 8dB(A) erfinderseitig festgestellt.

Falls an den Transformator drei getaktete Umrichter angeschlossen sind, werden die drei Umrichter vorzugsweise mit einer Phasendifferenz betrieben, die kleiner als 120° ist.

Um zu erreichen, dass möglichst geringe Magnetostriktionsgeräusche sowie eine möglichst geringe Netzrückwirkung auftreten, werden vorzugsweise zwei oder mehr Transformatoren parallel geschaltet, wobei an jeden Transformator jeweils eine vorgegebene Anzahl an getakteten Umrichtern angeschlossen wird. Die Phasenlage der Umrichter wird dabei derart eingestellt, dass die Phasendifferenz zwischen der Phasenlage eines jeden Umrichters relativ zur Phasenlage des phasenmäßig jeweils am nächsten liegenden Umrichters desselben Transformators kleiner als eine transformatorbezogen vorgegebene Grenzphasenlage ist. Die transformatorbezogen vorgegebene Grenzphasenlage errechnet sich dabei durch Quotientenbildung aus 360° und der Anzahl der an den jeweiligen Transformator angeschlossenen Umrichter. Unter dem Begriff "phasenmäßig am nächsten liegend" wird auch hierbei jeweils derjenige Umrichter verstanden, der den geringsten Phasenabstand zum jeweiligen "Referenz-Umrichter" aufweist.

Bezogen auf die Gesamtanordnung werden die Phasenlagen der Umrichter vorzugsweise derart eingestellt, dass die Phasendifferenz zwischen der Phasenlage eines jeden Umrichters relativ zur Phasenlage des phasenmäßig jeweils benachbarten Umrichters der gesamten Anordnung einer anordnungsbezogen vorgegebenen Sollphasenlage entspricht; diese anordnungsbezogen vorgegebene Sollphasenlage wird durch Quotientenbildung aus 360° und der Gesamtanzahl der an die Anordnung angeschlossenen Umrichter gebildet.

Beispielsweise können zwei Transformatoren parallel geschaltet werden, wobei an jeden der beiden Transformatoren jeweils zwei getaktete Umrichter angeschlossen werden; die Phasenlagen der Umrichter werden dann derart eingestellt, dass die Phasendifferenz zwischen den Phasen der Umrichter ein und desselben Transformators jeweils kleiner als 180 Grad ist. Vorzugsweise wird die Phasendifferenz zwischen den Phasen der an denselben Transformator angeschlossenen Umrichter auf 90 Grad eingestellt. Besonders bevorzugt werden die vier Umrichter der Anordnung derart angesteuert, dass die Phasendifferenz zwischen den Phasen jeweils phasenmäßig am nächsten liegender Umrichter der Anordnung 90 Grad beträgt; die Ansteuerung der vier Umrichter erfolgt dann also mit einem Phasenversatz von 90 Grad, 180 Grad, 270 Grad und 360 Grad.

Gemäß einer anderen bevorzugten Ausgestaltung des Verfahrens ist vorgesehen, dass drei Transformatoren parallel geschaltet werden und dass an jeden der drei Transformatoren jeweils zwei getaktete Umrichter angeschlossen werden, wobei die Phasenlagen der Umrichter derart eingestellt werden, dass die Phasendifferenz zwischen den Phasen der beiden Umrichter ein und desselben Transformators jeweils 180 Grad unterschreitet. Besonders bevorzugt werden die Phasenlagen der Umrichter derart eingestellt, dass die Phasendifferenz zwischen den Phasen der phasenmäßig jeweils am nächsten liegenden Umrichter der Anordnung zueinander 60 Grad beträgt; die Ansteuerung der Umrichter erfolgt dann mit Phasenlagen von 60 Grad, 120 Grad, 180 Grad, 240 Grad, 300 Grad und 360 Grad.

Wie bereits eingangs erwähnt, lässt sich das erfindungsgemäße Verfahren besonders vorteilhaft im Bereich der Eisenbahntechnik einsetzen, beispielsweise zur Ansteuerung von Antriebsmotoren von Schienenfahrzeugen, indem mit den Umrichtern entsprechende Ausgangsspannungen und/oder Ausgangsströme erzeugt werden.

Die Erfindung bezieht sich darüber hinaus auf eine elektrische Anordnung mit zumindest einem induktiv wirkenden elektrischen Bauelement, insbesondere einem Transformator, und mit einer vorgegebenen Anzahl an getakteten Umrichtern, die an das Bauelement angeschlossen sind und mit derselben Taktfrequenz, jedoch unterschiedlichen Phasenlagen relativ zueinander arbeiten.

Um bei einer solchen Anordnung störende Magnetostriktionsgeräusche zu reduzieren, ist erfindungsgemäß vorgesehen, dass die Phasenlagen der Umrichter derart eingestellt sind, dass die Phasendifferenz zwischen der Phasenlage eines jeden Umrichters relativ zur Phasenlage des phasenmäßig jeweils am nächsten liegenden Umrichters kleiner ist als eine vorgegebene Grenzphasenlage, wobei die Grenzphasenlage sich ergibt durch Quotientenbildung aus 360 Grad und der Anzahl der an das zumindest eine Bauelement angeschlossenen Umrichter.

Bezüglich der Vorteile der erfindungsgemäßen Anordnung wird auf die obigen Ausführungen im Zusammenhang mit dem erfindungsgemäßen Verfahren verwiesen. Vorteilhafte Ausgestaltungen der erfindungsgemäßen Anordnung sind in Unteransprüchen dargestellt.

Zu erwähnen ist noch, dass die erfindungsgemäße Anordnung beispielsweise als Teil einer Ansteuereinrichtung für schienengebundene Fahrzeuge eingesetzt werden kann; die Erfindung bezieht sich somit ebenfalls sowohl auf derartige Antriebsmotor-Ansteuereinrichtungen als auch auf die entsprechend ausgestatteten Schienenfahrzeuge selbst.

Die Erfindung wird nachfolgend anhand von Ausführungsbeispielen erläutert, dabei zeigen

Figur 1     eine Anordnung bestehend aus zwei Transformatoren, an die jeweils zwei getaktete Umrichter angeschlossen sind, wobei bei der Anordnung von dem erfindungsgemäßen Gedanken kein Gebrauch gemacht wird,

Figur 2     eine Tabelle mit den in den Umrichtern gemäß Figur 1 fließenden Störströmen sowie deren konstruktive und destruktive Überlagerung,

Figur 3     die resultierenden Stromzeiger der in den Transformatoren gemäß Figur 1 fließenden Störströme,

Figur 4     ein erstes Ausführungsbeispiel einer erfindungsgemäßen Anordnung mit zwei Transformatoren mit jeweils zwei darin angeschlossenen getakteten Umrichtern,

Figur 5     eine Tabelle mit den in den Umrichtern gemäß Figur 4 fließenden Störströmen sowie deren konstruktive und destruktive Überlagerung,

Figur 6     die Stromzeiger der in den Transformatoren gemäß Figur 4 fließenden Störströme,

Figur 7     ein zweites Ausführungsbeispiel einer erfindungsgemäßen Anordnung mit drei parallel geschalteten Transformatoren mit jeweils zwei daran angeschlossenen, getakteten Umrichtern und

Figur 8     ein drittes Ausführungsbeispiel einer Anordnung mit vier parallel geschalteten Transformatoren mit jeweils zwei daran angeschlossenen, getakteten Umrichtern.

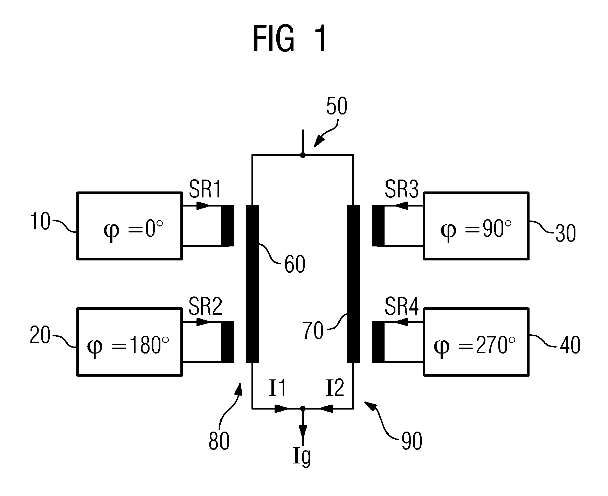

In den Figuren 1 bis 8 werden für identische oder vergleichbare Komponenten stets dieselben Bezugszeichen verwendet.

In der Figur 1 erkennt man vier getaktete Umrichter 10, 20, 30, 40, die mit einem Energieversorgungsnetz bzw. Speisenetz 50 in Verbindung stehen. Konkret sind die beiden Umrichter 10 und 20 an einem ersten Transformator 60 und die beiden Umrichter 30 und 40 an einem zweiten Transformator 70 angeschlossen. Die beiden Transformatoren 60 und 70 sind elektrisch parallel geschaltet.

Bei den Umrichtern 10, 20, 30 und 40 handelt es sich um getaktete Umrichter, die aufgrund ihres Taktbetriebes auf das Energieversorgungsnetz 50 zurückwirken und in dieses Störströme SR1 bis SR4 mit der Taktfrequenz f sowie ganzzahligen Vielfachen der Taktfrequenz einspeisen. Bei den Umrichtern kann es sich beispielsweise um Stromrichter, Gleichstromsteller, Vierquadrantensteller oder um Schaltnetzteile handeln. Wie die getakteten Umrichter konkret ausgestaltet sind, spielt für die nachfolgenden Erläuterungen keine Rolle; von Bedeutung ist lediglich, dass aufgrund des getakteten Betriebs der Umrichter die bereits erläuterte Netzrückwirkung mit Störstromanteilen in den Transformatoren 60 und 70 auftritt und damit einhergehend Störgeräusche durch Magnetostriktion in den Transformatoren 60 und 70 gebildet werden können.

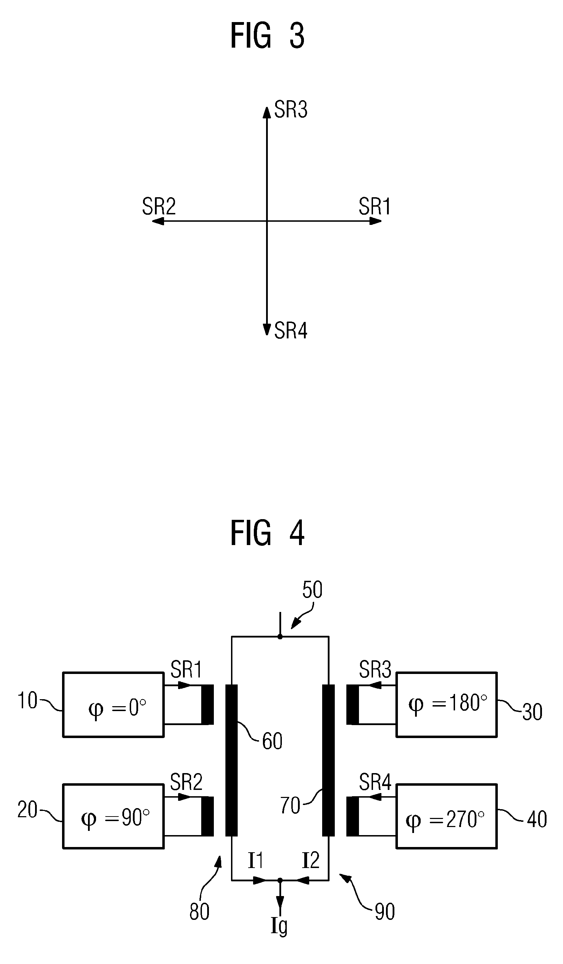

Bei der Anordnung gemäß der Figur 1 wird von der Erfindung kein Gebrauch gemacht; die Ausführungen zur Anordnung gemäß der Figur 1 sind aber dennoch nützlich, um das Wesen der weiter unten im Zusammenhang mit den Figuren 4ff. beschriebenen Erfindung zu verdeutlichen. Bei der Anordnung gemäß der Figur 1 weisen die beiden Umrichter 10 und 20 untereinander eine Phasendifferenz $\Delta\varphi = 180°$ und die beiden Umrichter 30 und 40 untereinander ebenfalls eine Phasendifferenz $\Delta\varphi = 180°$ auf. Die Phasendifferenz $\Delta\varphi$ zwischen den an ein und denselben Transformator angeschlossenen Umrichtern entspricht somit der eingangs definierten Grenzphasenlage $\Delta\varphi g$, die sich errechnet gemäß

$$\Delta\varphi g = 360° / Q = 180°$$

wobei Q die Anzahl der an den jeweiligen Transformator angeschlossenen Umrichter bezeichnet. Im vorliegenden Fall beträgt Q = 2, da an jeden Transformator 60, 70 jeweils zwei Umrichter angeschlossen sind.

Die Taktfrequenz der Umrichter beträgt beispielsweise f = 1 kHz. Um nun zu erreichen, dass aus Sicht des Energieversorgungsnetzes 50 eine Gesamttaktfrequenz von 4 kHz auftritt, sind die beiden Umrichterzweige 80 und 90 bestehend aus den Umrichtern 10 und 20 einerseits sowie aus den beiden Umrichtern 30 und 40 andererseits um 90° zueinander phasenverschoben. Dies bedeutet, dass der Umrichter 30 des in der Figur 1 rechten Umrichterzweigs 90 gegenüber dem Umrichter 10 des in der Figur 1 linken Umrichterzweigs 80 um 90° phasenversetzt ist; Entsprechendes gilt für die beiden Umrichter 40 und 20, da auch der Umrichter 40 eine Phasenlage aufweist, die gegenüber der Phasenlage des Umrichters 20 um 90° phasenversetzt ist. In der Summe weisen die vier Umrichter 10, 20, 30 und 40 also Phasenlagen $\varphi$ von 0, 90, 180 und 270° auf.

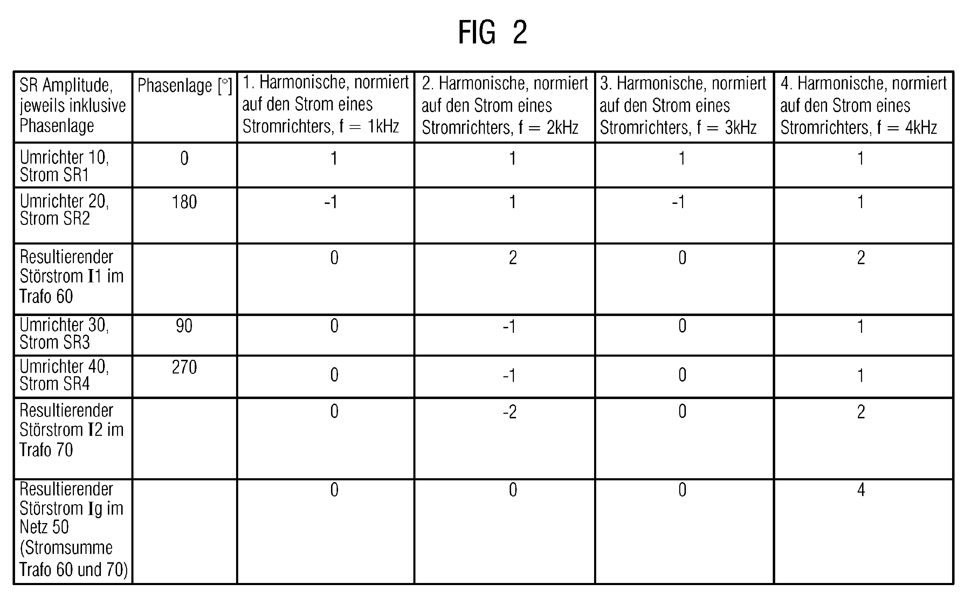

Die vier Umrichter 10, 20, 30 und 40 erzeugen Störströme SR1 bis SR4, die sie in das Energieversorgungsnetz 50 einspeisen. Diese Störströme weisen die Taktfrequenz f des Umrichters sowie Vielfache dieser Taktfrequenz auf. Die Amplitudenverteilung und die Überlagerung der Störströme bei den einzelnen Frequenzen sind in der Tabelle gemäß Figur 2 gezeigt. Die Amplitudenangaben sind dabei jeweils normiert aufgeführt, und zwar normiert auf die jeweilige Maximalamplitude bei der jeweiligen Frequenz.

Man erkennt, dass die Störströme SR1 und SR2 der beiden Umrichter 10 und 20 bei der Taktfrequenz f = 1 kHz um 180° phasenversetzt sind, so dass sich die entsprechenden Störstromanteile im ersten Transformator 60 auslöschen. Bei der Taktfrequenz f = 1 kHz entsteht somit im ersten Transformator 60 kein Störsignal und dementsprechend auch kaum ein magnetostriktiv bedingtes akustisches Störgeräusch. Entsprechendes gilt für die dritte Harmonische der Taktfrequenz, also die Frequenz f = 3 kHz; denn auch bei dieser Frequenz löschen sich die Störströme der beiden Umrichter 10 und 20 aus, so dass im ersten Transformator 60 auch bei f = 3 kHz kaum Magnetostriktionsgeräusch erzeugt wird.

Es ist jedoch in der Figur 2 erkennbar, dass bei der zweiten Harmonischen der Taktfrequenz sowie bei der vierten Harmonischen, also bei den Frequenzen f = 2 kHz und f = 4 kHz, eine konstruktive Überlagerung der Störsignalanteile der beiden Umrichter 10 und 20 auftritt. Dies hat zur Folge, dass der erste Transformator 60 bei den beiden Frequenzen f = 2 kHz und f = 4 kHz akustische Störgeräusche verursacht, wobei insbesondere das Störgeräusch bei der Frequenz von 2 kHz vom menschlichen Ohr als besonders störend empfunden wird.

In der Figur 2 ist darüber hinaus erkennbar, dass der in der Figur 1 rechte Umrichterzweig 90 bestehend aus den beiden Umrichtern 30 und 40 dasselbe Verhalten aufweist. Auch die Störströme SR3 und SR4 der beiden Umrichter 30 und 40 überlagern sich im zweiten Transformator 70 bei der Taktfrequenz sowie beim Dreifachen der Taktfrequenz destruktiv, so dass es zu keiner Störgeräuschbildung bei 1 kHz und 3 kHz kommen kann. Jedoch tritt dafür eine erhebliche Geräuschbildung durch f = 2 kHz auf.

In der Figur 2 ist außerdem erkennbar, dass aufgrund der Parallelschaltung der beiden Transformatoren 60 und 70 die Störsignale bei der doppelten Taktfrequenz einander derart überlagern, dass sie sich gegenseitig auslöschen. In der Gesamtbetrachtung bleibt somit im Energieversorgungsnetz 50 lediglich ein Störstrom Ig mit der vierfachen Taktfrequenz als Grundfrequenz, also der Frequenz f = 4 kHz, übrig. Die übrigen Störfrequenzen bei 1 kHz, 2 kHz und 3 kHz verschwinden im Energieversorgungsnetz 50 durch destruktive Überlagerung vollständig.

In der Figur 3 sind die in den beiden Transformatoren 60 und 70 fließenden Störströme SR1 und SR2 bzw. SR3 und SR4 nochmals in Form eines Zeigerdiagramms dargestellt. Man erkennt, dass die im ersten Transformator 60 fließenden Ströme eine Phasenlage von 180° zueinander aufweisen und sich somit bezogen auf die Taktfrequenz und alle ungeraden Vielfachen der Taktfrequenz destruktiv überlagern. Entsprechendes gilt für die in dem zweiten Transformator 70 fließenden Ströme SR3 und SR4, die ebenfalls untereinander eine Phasenlage von 180° aufweisen und sich ebenfalls bezogen auf die ersten Harmonische sowie alle ungeraden Vielfachen Harmonischen destruktiv überlagern.

In der Figur 4 ist ein erstes Ausführungsbeispiel einer erfindungsgemäßen Anordnung dargestellt; anhand dieses Ausführungsbeispiels wird nachfolgend auch das erfindungsgemäße Verfahren beschrieben.

Man erkennt in der Figur 4, dass die beiden Umrichter 10 und 20 des ersten Umrichterzweigs 80 eine Phasenlage von 90° zueinander aufweisen; entsprechend weisen auch die beiden Umrichter 30 und 40 des zweiten Umrichterzweigs 90 zueinander eine Phasenlage von 90° auf.

Die Phasenlagen φ der Umrichter sind somit derart eingestellt, dass die Phasendifferenz Δφ zwischen der Phasenlage eines jeden Umrichters relativ zur Phasenlage des phasenmäßig jeweils am nächsten liegenden Umrichters desselben Transformators bzw. desselben Umrichterzweigs kleiner ist als eine vorgegebene Grenzphasenlage; es gilt also:

$$\Delta\varphi = 90° < \Delta\varphi g = 360°/Q = 360°/2 = 180°$$

wobei Δφg die Grenzphasenlage und Q die Anzahl der an den jeweiligen Transformator angeschlossenen Umrichter angibt. Hier beträgt Q = 2, da zwei Umrichter an jeden Transformator angeschlossen sind.

Gleichzeitig sind die Phasenlagen φ der Umrichter derart eingestellt, dass die Phasendifferenz Δφ zwischen der Phasenlage eines jeden Umrichters relativ zur Phasenlage des phasenmäßig jeweils am nächsten liegenden Umrichters der Gesamtanordnung einer anordnungsbezogen vorgegebenen Sollphasenlage φsoll entspricht; diese anordnungsbezogen vorgegebene Sollphasenlage φsoll errechnet sich gemäß:

$$\varphi soll = 360°/M = 90°$$

M gibt dabei die Gesamtzahl der an die Anordnung angeschlossenen Umrichter an; hier ist M = 4.

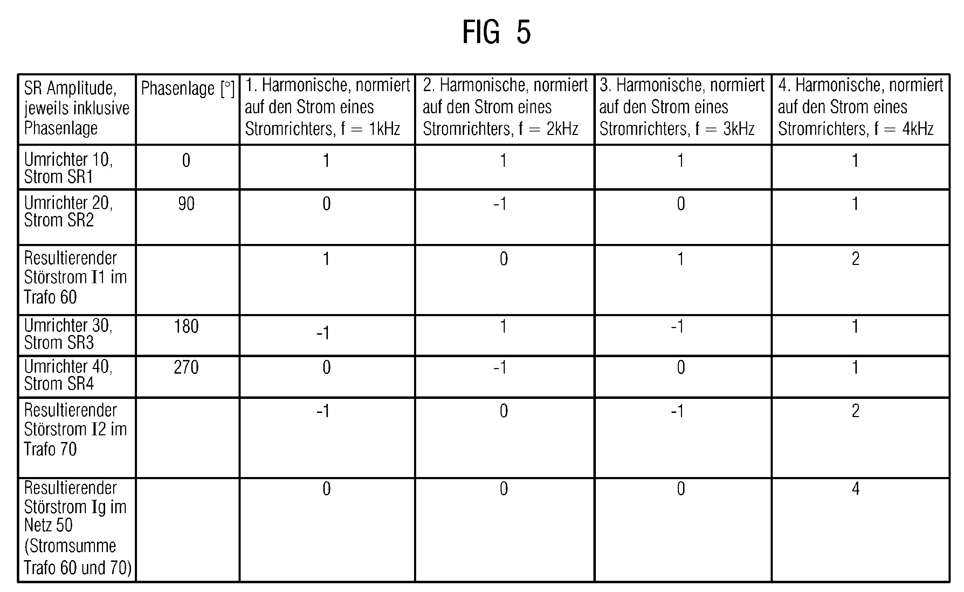

Aufgrund dieser Phasenlagen kommt es zu einer gegenüber der Anordnung gemäß Figur 1 modifizierten Überlagerung der von den getakteten Umrichtern 10, 20, 30 und 40 erzeugten Störströme SR1 bis SR4. Dies ist konkret in der Tabelle gemäß Figur 5 erkennbar, in der - analog zur Tabelle gemäß Figur 2 - die bei der Taktfrequenz sowie bei den Vielfachen der Taktfrequenz auftretenden Störströme tabellarisch in normierter Form zusammengestellt sind. Man erkennt, dass bei der Taktfrequenz f = 1 kHz aufgrund der Phasenlage von 90° zwischen den beiden Umrichtern eines jeden Umrichterzweigs 80 bzw. 90 keine Auslöschung des resultierenden Störstromes I1 bzw. I2 in den beiden Transformatoren 60 und 70 mehr eintritt; vielmehr bleibt auch bei der Taktfrequenz f = 1 kHz eine Störstromkomponente in den beiden Transformatoren 60 und 70 erhalten; Entsprechendes gilt für die dritte Harmonische der Taktfrequenz, also für die Frequenz f = 3 kHz.

Dieser an sich negative Effekt wird jedoch kompensiert dadurch, dass es im Unterschied zu der Anordnung gemäß Figur 1 zu einer destruktiven Überlagerung der Störströme bei der doppelten Taktfrequenz f = 2 kHz kommt, so dass in den beiden Transformatoren 60 und 70 keine Störströme mit der doppelten Taktfrequenz fließen können. Im Unterschied zu der Anordnung gemäß Figur 1 ist eine Geräuschbildung aufgrund der doppelten Taktfrequenz f = 2 kHz ausgeschlossen.

Es lässt sich somit feststellen, dass es bei der Anordnung gemäß der Figur 4 aufgrund des Phasenversatzes von 90° zwischen den Umrichtern 10 und 20 einerseits und den Umrichtern 30 und 40 andererseits zu einer anderen spektralen Störstromverteilung kommt. Anstelle einer verstärkten "doppelten" Anregung bei der doppelten Taktfrequenz f = 2 kHz wie bei der Anordnung gemäß Figur 1 kommt es bei der Anordnung gemäß Figur 4 zu einer "einfachen" Anregung bei der Taktfrequenz f = 1 kHz sowie zu einer "einfachen" Anregung bei der dreifachen Taktfrequenz f = 3 kHz; es tritt also keine Amplitudenverdopplung auf. Diese andere spektrale Verteilung führt insgesamt zu einer geringeren magnetostriktiven Geräuschbildung und somit zu einer insgesamt geringeren Geräuschbelästigung für das menschliche Ohr. Konkret tritt eine Geräuschreduktion von 8 dB(A) gegenüber der Anordnung gemäß Figur 1 auf.

Zusammengefasst werden aufgrund der Phasenlagen der Umrichter zueinander bei der Anordnung gemäß der Figur 4 zwar mehr Störfrequenzen als bei der Anordnung gemäß der Figur 1 erzeugt, jedoch ist die Amplitudenverteilung der Störsignale insgesamt günstiger, wodurch die Geräuschbildung insgesamt reduziert wird.

In der Tabelle gemäß Figur 5 lässt sich darüber hinaus erkennen, dass die unterschiedliche Verteilung der Phasenlagen auf die einzelnen Umrichter 10 bis 40 für das Energieversorgungsnetz 50 keine Rolle spielt, da sowohl bei der Anordnung gemäß Figur 1 als auch bei der Anordnung gemäß 4 die Störstromkomponenten bei der Taktfrequenz f = 1 kHz, bei der zweifachen Taktfrequenz f = 2 kHz und bei der dreifachen Taktfrequenz f = 3 kHz ausgelöscht werden; lediglich bei der vierfachen Taktfrequenz f = 4 kHz bleibt eine Störkomponente übrig, die in das Energieversorgungsnetz 50 eingespeist wird.

Im Ergebnis ist somit festzustellen, dass bei der Anordnung gemäß Figur 4, bei der die Umrichter eines jeden Umrichterzweigs eine Phasenlage von 90° zueinander aufweisen, eine für den Menschen geringere Geräuschbelastung durch Magnetostriktion auftritt als bei der Anordnung gemäß Figur 1, bei der die Umrichter eines jeden Umrichterzweigs jeweils eine "maximal mögliche" Phasenlage von 180° zueinander aufweisen.

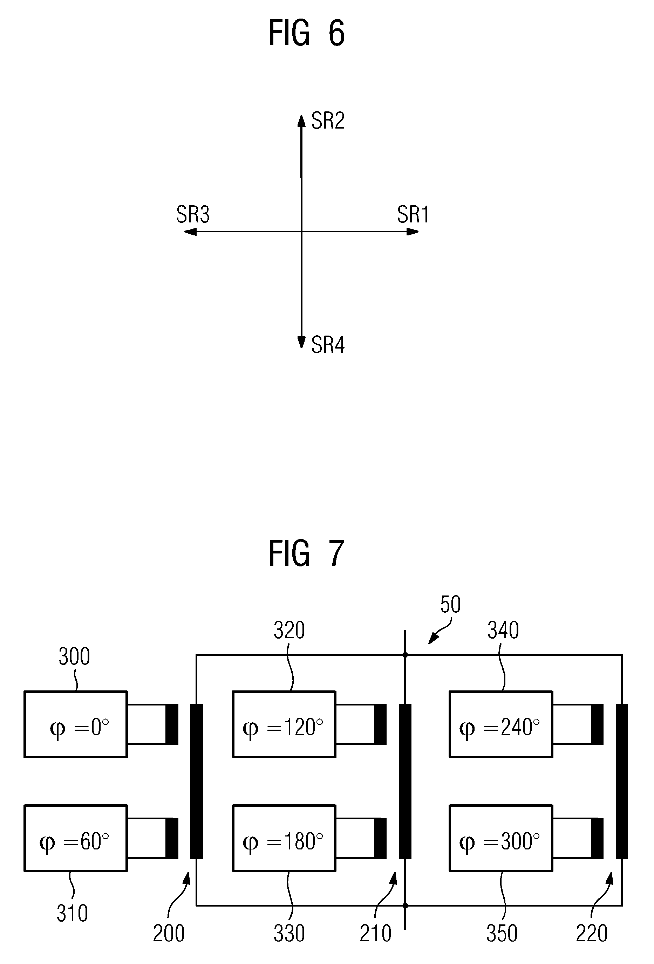

In der Figur 6 ist die Phasenlage der Störströme relativ zueinander nochmals in einem Zeigerdiagramm dargestellt. Man erkennt, dass die im Transformator 60 fließenden Störströme SR1 und SR2 senkrecht aufeinander stehen; Entsprechendes gilt für die Störströme SR3 und SR4, die im zweiten Transformator 70 fließen. Insgesamt - bezogen auf das Energieversorgungsnetz 50 - ergibt sich jedoch eine Stromzeigerverteilung, die der Stromzeigerverteilung gemäß Figur 3 entspricht, da nämlich die Stromzeiger untereinander jeweils eine Phasenlage von 90° zueinander aufweisen.

In der Figur 7 ist ein zweites Ausführungsbeispiel für eine erfindungsgemäße Anordnung gezeigt. Bei dieser Anordnung sind drei Transformatoren 200, 210 und 220 parallel geschaltet und bilden jeweils einen Speisezweig. An jeden der beiden Transformatoren 200, 210 und 220 sind jeweils zwei Umrichter 300 bis 350 angeschlossen.

Die Phasendifferenz $\Delta\varphi$ zwischen den beiden an den ersten Transformator 200 angeschlossenen Umrichtern 300 und 310 beträgt 60°; in entsprechender Weise sind die Phasendifferenzen zwischen den Umrichtern 320 und 330 im zweiten Umrichterzweig und die Phasenlagen zwischen den beiden Umrichtern 340 und 350 im dritten Umrichterzweig gewählt.

Die Phasenlagen $\varphi$ der Umrichter sind somit derart eingestellt, dass die Phasendifferenz $\Delta\varphi$ zwischen der Phasenlage eines jeden Umrichters relativ zur Phasenlage des "Nachbar-Umrichters" desselben Transformators bzw. desselben Umrichterzweigs kleiner ist als eine vorgegebene Grenzphasenlage; es gilt also:

$$\Delta\varphi = 60° < \Delta\varphi g = 360° / Q = 360° / 2 = 180°$$

wobei $\Delta\varphi g$ die Grenzphasenlage und Q die Anzahl der an den jeweiligen Transformator angeschlossenen Umrichter angibt. Hier beträgt Q = 2, da zwei Umrichter an jeden Transformator angeschlossen sind.

In der Figur 7 ist darüber hinaus erkennbar, dass die Phasendifferenz zwischen zwei phasenbezogenen "Nachbar-Umrichtern" stets $\Delta\varphi$ = 60° beträgt, und zwar unabhängig davon, zu welchem Transformator bzw. Umrichterzweig der jeweilige Umrichter gehört: So beträgt beispielsweise die Phasendifferenz zwischen der Phasenlage des Umrichters 300 und der des Umrichters 310 $\Delta\varphi$ = 60° und die Phasendifferenz $\Delta\varphi$ zwischen dem Umrichter 310 und dem Umrichter 320 ebenfalls 60°. Der Phasenabstand $\Delta\varphi$ zwischen phasenmäßig benachbarten Umrichtern entspricht somit stets einer anordnungsbezogen vorgegebenen Sollphasenlage $\varphi soll$ gemäß:

$$\Delta\varphi = \varphi soll = 360°/M = 60°$$

M gibt dabei die Gesamtzahl der in der Anordnung vorhandenen Umrichter an. Da in der Anordnung gemäß der Figur 7 insgesamt sechs Umrichter (M=6) eingesetzt werden, beträgt der Phasenabstand zwischen phasenmäßig benachbarten Umrichtern somit idealerweise $\Delta\varphi$ = 60°. Eine solche Wahl der Phasenlagen stellt sicher, dass in dem Energieversorgungsnetz 50 eine nur minimale Störstromrückwirkung auftritt, weil es nämlich zu einer maximalen Störsignalauslöschung der Störströme kommt.

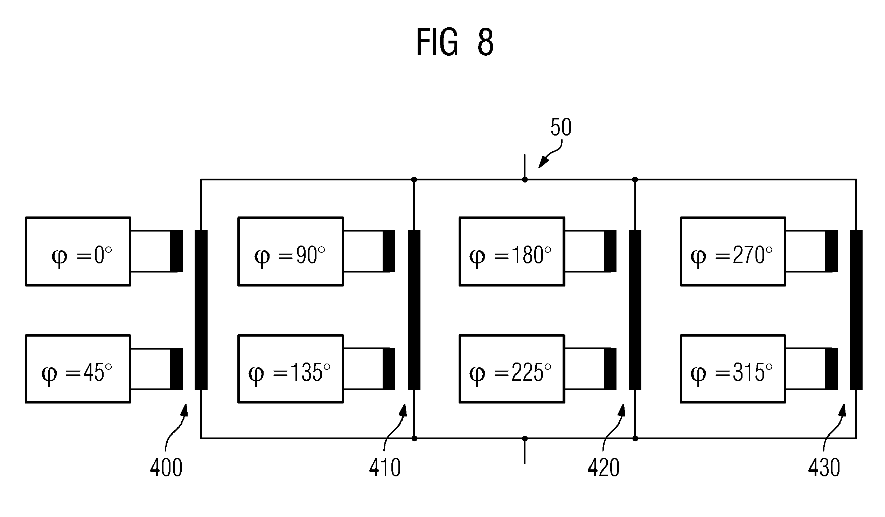

In der Figur 8 ist ein drittes Ausführungsbeispiel für eine erfindungsgemäße Anordnung gezeigt. Man erkennt, dass die Anordnung insgesamt vier Umrichterzweige mit jeweils einem Transformator 400, 410, 420 und 430 umfasst. An jeden Transformator sind jeweils zwei Umrichter angeschlossen. Die Phasendifferenz zwischen den Umrichtern ein und desselben Umrichterzweigs beträgt jeweils 45°. Die Phasendifferenz zwischen Umrichtern verschiedener Umrichterzweige ist so gewählt, dass die Phasendifferenz $\Delta\varphi$ zwischen den Phasenlagen phasenmäßig benachbarter Umrichter ebenfalls jeweils 45° beträgt. Der Wert von $\Delta\varphi$ = 45° entspricht dabei - wie bereits erläutert - der Sollphasenlage $\varphi soll$ gemäß:

$$\Delta\varphi = \varphi soll = 360° / M = 45°$$

mit M = Gesamtzahl der Umrichter der Anordnung = 8.

**Patentansprüche**

1. Verfahren zum Betreiben einer elektrischen Anordnung mit zumindest einem Transformator (60), an den eine vorgegebene Anzahl an getakteten Umrichtern (10, 20) angeschlossen ist, wobei die Umrichter mit derselben Taktfrequenz (f) und unterschiedlichen Phasenlagen ($\varphi$) der Taktung relativ zueinander betrieben werden, **dadurch gekennzeichnet, dass**

   - die Phasenlagen der Umrichter derart eingestellt werden, dass die Phasendifferenz ($\Delta\varphi$)zwischen der Phasenlage eines jeden Umrichters relativ zur Phasenlage des phasenmäßig jeweils am nächsten liegenden Umrichters kleiner ist als eine vorgegebene Grenzphasenlage ($\Delta\varphi g$),
   - wobei sich die Grenzphasenlage errechnet durch Quotientenbildung aus 360 Grad und der Anzahl (Q) der an den zumindest einen Transformator (60) angeschlossenen Umrichter.

2. Verfahren nach Anspruch 1, **dadurch gekennzeichnet, dass** an den Transformator (60) zwei Umrichter (10, 20) angeschlossen sind und die beiden Umrichter mit einer Phasendifferenz ($\Delta\varphi$), die 180 Grad unterschreitet, betrieben werden.

3. Verfahren nach Anspruch 2, **dadurch gekennzeichnet, dass** die beiden Umrichter mit einer Phasendifferenz zwischen 45 Grad und 135 Grad betrieben werden.

4. Verfahren nach Anspruch 3, **dadurch gekennzeichnet, dass** die beiden Umrichter mit einer Phasendifferenz von 90 Grad betrieben werden.

5. Verfahren nach einem der voranstehenden Ansprüche, **dadurch gekennzeichnet, dass** an den Transformator drei getaktete Umrichter angeschlossen sind und die drei Umrichter mit einer Phasendifferenz, die kleiner als 120 Grad ist, betrieben werden.

6. Verfahren nach einem der voranstehenden Ansprüche, **dadurch gekennzeichnet, dass** eine Anordnung mit zwei oder mehr parallel geschalteten Transformatoren (60, 70) betrieben wird,

   - wobei an jeden der Transformatoren jeweils eine vorgegebene Anzahl (Q) an getakteten Umrichtern (10, 20, 30, 40) angeschlossen wird und
   - wobei die Phasenlagen ($\varphi$) der Umrichter derart eingestellt werden, dass die Phasendifferenz ($\Delta\varphi$) zwischen der Phasenlage eines jeden Umrichters (10) und der Phasenlage des phasenmäßig jeweils am nächsten liegenden Umrichters (20) desselben Transformators (60) kleiner als eine transformatorbezogen vorgegebene Grenzphasenlage ($\Delta\varphi g$) ist, wobei sich die transformatorbezogen vorgegebene Grenzphasenlage ($\Delta\varphi g$) errechnet durch Quotientenbildung aus 360 Grad und der Anzahl (Q) der an den jeweiligen Transformator (60) angeschlossenen Umrichter.

7. Verfahren nach Anspruch 6, **dadurch gekennzeichnet, dass**

   - die Phasenlagen der Umrichter derart eingestellt werden, dass die Phasendifferenz ($\Delta\varphi$) zwischen der Phasenlage eines jeden Umrichters und der Phasenlage des phasenmäßig jeweils am nächsten liegenden Umrichters der Anordnung einer anordnungsbezogen vorgegebenen Sollphasenlage ($\varphi soll$) entspricht, wobei sich die anordnungsbezogen vorgegebene Sollphasenlage errechnet durch Quotientenbildung aus 360 Grad und der Gesamtzahl (M) der in der Anordnung enthaltenen Umrichter.

8. Verfahren nach einem der voranstehenden Ansprüche 6 oder 7, **dadurch gekennzeichnet, dass** die Anordnung zwei parallel geschaltete Transformatoren (60, 70) aufweist, wobei an jeden der beiden Transformatoren jeweils zwei getaktete Umrichter angeschlossen sind und wobei die Phasenlagen der Umrichter derart eingestellt werden, dass die Phasendifferenz zwischen den Phasen derjenigen Umrichter, die jeweils an denselben Transformator angeschlossen sind, kleiner als 180 Grad ist.

9. Verfahren nach Anspruch 8, **dadurch gekennzeichnet, dass** die Phasendifferenz zwischen den Phasen der an denselben Transformator angeschlossenen Umrichter auf 90 Grad eingestellt wird.

**10.** Verfahren nach Anspruch 9, **dadurch gekennzeichnet, dass** die vier Umrichter der Anordnung derart angesteuert werden, dass die Phasendifferenz zwischen den Phasen jeweils phasenmäßig am nächsten liegender Umrichter der Anordnung 90 Grad beträgt.

**11.** Verfahren nach einem der voranstehenden Ansprüche, **dadurch gekennzeichnet, dass** die Anordnung drei parallel geschaltete Transformatoren (200, 210, 220) aufweist, wobei an jeden der drei Transformatoren jeweils zwei getaktete Umrichter (310, 320, 330, 340, 350) angeschlossen sind und wobei die Phasenlagen der Umrichter derart eingestellt werden, dass für jeden Transformator die Phasendifferenz der Phasen der an den Transformator angeschlossenen Umrichter jeweils 180 Grad unterschreitet.

**12.** Verfahren nach Anspruch 11, **dadurch gekennzeichnet, dass** die Phasenlagen der Umrichter derart eingestellt werden, dass die Phasendifferenz ($\Delta\varphi$) zwischen den Phasen der phasenmäßig jeweils am nächsten liegenden Umrichter der Anordnung zueinander 60 Grad beträgt.

**13.** Verfahren nach einem der voranstehenden Ansprüche, **dadurch gekennzeichnet, dass** die Anordnung vier parallel geschaltete Transformatoren (400, 410, 420, 430) aufweist, wobei an jeden der vier Transformatoren jeweils zwei getaktete Umrichter angeschlossen sind und wobei die Phasenlagen der Umrichter derart eingestellt werden, dass die Phasendifferenz zwischen den Phasen der beiden Umrichter ein und desselben Transformators jeweils 180 Grad unterschreitet.

**14.** Verfahren nach Anspruch 13, **dadurch gekennzeichnet, dass** die Phasenlagen der Umrichter derart eingestellt werden, dass die Phasendifferenz ($\Delta\varphi$) zwischen den Phasen der phasenmäßig jeweils am nächsten liegenden Umrichter der Anordnung zueinander 45 Grad beträgt.

**15.** Verfahren nach einem der voranstehenden Ansprüche, **dadurch gekennzeichnet, dass** mit den Ausgangsspannungen und/oder Ausgangsströmen der Umrichter ein Antriebsmotor angesteuert wird.

**16.** Verfahren nach Anspruch 15, **dadurch gekennzeichnet, dass** der Antriebsmotor eines Schienenfahrzeugs angesteuert wird.

**17.** Elektrische Anordnung

   - mit zumindest einem induktiv wirkenden elektrischen Bauteil, insbesondere einem Transformator (60), und
   - mit einer vorgegebenen Anzahl (Q) an getakteten Umrichtern (10, 20), die an das Bauteil (60) angeschlossen sind und mit derselben Taktfrequenz (f) und unterschiedlichen Phasenlagen (($\varphi$) relativ zueinander arbeiten,

   **dadurch gekennzeichnet, dass**

   - die Phasenlagen der Umrichter derart eingestellt sind, dass die Phasendifferenz ($\Delta\varphi$) zwischen der Phasenlage eines jeden Umrichters und der Phasenlage des phasenmäßig jeweils am nächsten liegenden Umrichters kleiner ist als eine vorgegebene Grenzphasenlage ($\Delta\varphi g$),
   - wobei sich die Grenzphasenlage errechnet durch Quotientenbildung aus 360 Grad und der Anzahl (Q) der an das zumindest ein Bauteil (60) angeschlossenen Umrichter.

**18.** Anordnung nach Anspruch 17, **dadurch gekennzeichnet, dass** zumindest einer der Umrichter durch einen Stromrichter, einen Gleichstromsteller, einen Vierquadrantensteller oder ein Schaltnetzteil gebildet ist.

**19.** Anordnung nach Anspruch 17 oder 18, **dadurch gekennzeichnet, dass** die Umrichter (10, 20) hinsichtlich ihrer Phasenlage jeweils umstellbar sind.

**20.** Anordnung nach Anspruch 19, **dadurch gekennzeichnet, dass** mit den Umrichtern eine Steuereinrichtung in Verbindung steht, die die Phasenlage der Umrichter einstellt.

**21.** Anordnung nach einem der voranstehenden Ansprüche 17 bis 20, **dadurch gekennzeichnet, dass** die Anordnung eine Ansteuereinrichtung für einen Antriebsmotor bildet.

**22.** Anordnung nach Anspruch 21, **dadurch gekennzeichnet, dass** der Antriebsmotor ein Antriebsmotor eines Schienenfahrzeugs ist.

**23.** Anordnung nach einem der voranstehenden Ansprüche 17 bis 22, **dadurch gekennzeichnet, dass** die Phasenlage der Umrichter in Abhängigkeit von der Anzahl (Q) der an die Transformatoren jeweils angeschlossenen Umrichter und/oder in Abhängigkeit von der Gesamtzahl (M) der Umrichter gewählt ist, wie dies in einem der voranstehenden Ansprüche 1 bis 16 festgelegt ist.

**24.** Anordnung nach einem der voranstehenden Ansprüche 17 bis 23, **dadurch gekennzeichnet, dass** die Anordnung zwei parallel geschaltete Transformatoren (60, 70) aufweist, wobei an jeden der beiden Transformatoren jeweils zwei getaktete Umrichter angeschlossen sind und wobei die Phasenlagen der Umrichter derart eingestellt sind, dass jeweils die Phasendifferenz zwischen den Phasen der beiden Umrichter desselben Transformators 90 Grad beträgt und die Phasendifferenz zwischen den Phasen jeweils phasenmäßig am nächsten liegender Umrichter der Anordnung zueinander ebenfalls jeweils 90 Grad beträgt.

**25.** Anordnung nach einem der voranstehenden Ansprüche 17 bis 23, **dadurch gekennzeichnet, dass** die Anordnung drei parallel geschaltete Transformatoren (200, 210, 220) aufweist, wobei an jeden der drei Transformatoren jeweils zwei getaktete Umrichter angeschlossen sind und wobei die Phasenlagen der Umrichter derart eingestellt sind, dass jeweils die Phasendifferenz zwischen den Phasen der beiden Umrichter desselben Transformators 60 Grad beträgt und die Phasendifferenz zwischen den Phasen der phasenmäßig jeweils am nächsten liegenden Umrichter der Anordnung zueinander ebenfalls 60 Grad beträgt.

**26.** Anordnung nach einem der voranstehenden Ansprüche 17 bis 23, **dadurch gekennzeichnet, dass** die Anordnung vier parallel geschaltete Transformatoren (400, 410, 420, 430) aufweist, wobei an jeden der vier Transformatoren jeweils zwei getaktete Umrichter angeschlossen sind und wobei die Phasenlagen der Umrichter derart eingestellt sind, dass jeweils sowohl die Phasendifferenz zwischen den Phasen der beiden Umrichter desselben Transformators zueinander als auch die Phasendifferenz zwischen den Phasen der phasenmäßig jeweils am nächsten liegenden Umrichter der gesamten Anordnung zueinander 45 Grad beträgt.

# FIG 1

# FIG 2

| SR Amplitude, jeweils inklusive Phasenlage | Phasenlage [°] | 1. Harmonische, normiert auf den Strom eines Stromrichters, f = 1kHz | 2. Harmonische, normiert auf den Strom eines Stromrichters, f = 2kHz | 3. Harmonische, normiert auf den Strom eines Stromrichters, f = 3kHz | 4. Harmonische, normiert auf den Strom eines Stromrichters, f = 4kHz |
|---|---|---|---|---|---|
| Umrichter 10, Strom SR1 | 0 | 1 | 1 | 1 | 1 |
| Umrichter 20, Strom SR2 | 180 | -1 | 1 | -1 | 1 |
| Resultierender Störstrom I1 im Trafo 60 | | 0 | 2 | 0 | 2 |
| Umrichter 30, Strom SR3 | 90 | 0 | -1 | 0 | 1 |
| Umrichter 40, Strom SR4 | 270 | 0 | -1 | 0 | 1 |
| Resultierender Störstrom I2 im Trafo 70 | | 0 | -2 | 0 | 2 |
| Resultierender Störstrom Ig im Netz 50 (Stromsumme Trafo 60 und 70) | | 0 | 0 | 0 | 4 |

EP 1 715 572 A2

# FIG 3

# FIG 4

# FIG 5

| SR Amplitude, jeweils inklusive Phasenlage | Phasenlage [°] | 1. Harmonische, normiert auf den Strom eines Stromrichters, f = 1kHz | 2. Harmonische, normiert auf den Strom eines Stromrichters, f = 2kHz | 3. Harmonische, normiert auf den Strom eines Stromrichters, f = 3kHz | 4. Harmonische, normiert auf den Strom eines Stromrichters, f = 4kHz |
|---|---|---|---|---|---|
| Umrichter 10, Strom SR1 | 0 | 1 | 1 | 1 | 1 |
| Umrichter 20, Strom SR2 | 90 | 0 | -1 | 0 | 1 |
| Resultierender Störstrom I1 im Trafo 60 | | 1 | 0 | 1 | 2 |
| Umrichter 30, Strom SR3 | 180 | -1 | 1 | -1 | 1 |
| Umrichter 40, Strom SR4 | 270 | 0 | -1 | 0 | 1 |
| Resultierender Störstrom I2 im Trafo 70 | | -1 | 0 | -1 | 2 |
| Resultierender Störstrom Ig im Netz 50 (Stromsumme Trafo 60 und 70) | | 0 | 0 | 0 | 4 |

EP 1 715 572 A2

# FIG 6

# FIG 7

# FIG 8